# EUROPEAN PATENT APPLICATION

(11) **EP 4 415 247 A1**
(43) Date of publication of application: **14.08.2024**
(21) Application number: 24156750.2
(22) Date of filing: 09.02.2024
(51) Int. Cl.: H02M 7/487, H02M 7/483, H02M 1/00

(54) **POWER CONVERTER**

(30) Priority: 10.02.2023 US 202318167743
(71) Applicant: GE Energy Power Conversion Technology Limited, Rugby, Warwickshire CV21 1BD (GB); Virginia Tech Intellectual Properties, Inc., Blacksburg, VA 24061 (US)
(72) Inventor: ZHOU, Zhi, NISKAYUNA 123091027 (US); LIU, Jian, BLACKSBURG 24060 (US); MOTWANI, Jayesh Kumar, BLACKSBURG 24060 (US); DONG, Dong, BLACKSBURG 24060 (US); BURGOS, Rolando, BLACKSBURG 24060 (US)
(74) Representative: Casalonga

(57) **Abstract**

A power converter is proposed. The power converter comprises at least one leg (6) including a first string (7) including a plurality of switching units (21), a plurality of unidirectional current switches (22c, 22d), a first connecting node (11), and a second connecting node (12), wherein the first string is operatively coupled across a first and a second bus (9, 10), and a second string (8) operatively coupled to the first string (7) via the first connecting node (11) and the second connecting node (12), wherein the second string (8) comprises a plurality of unidirectional current switches (22e, 22f) and a fourth connecting node (19) operatively coupled to a fourth bus (20). The power converter comprises a controller configured to control switching of the plurality of switching units.

## Description

### FIELD OF TECHNOLOGY

The invention relates generally to power converters and more specifically to a multilevel converter.

### BACKGROUND

The document US 9,515,568 discloses a power converter comprising a plurality of legs, each leg including a first string coupled to a direct current DC link comprising a first bus, a neutral point, and a second bus, and a second string coupled to the first string and to an alternating current phase.

The first string includes a plurality of diodes and the second string includes a plurality of submodules, each submodule comprising a plurality of controllable switches and at least one energy storage device.

The power converter works when the DC link voltage is greater than the instantaneous AC max phase voltage, for example the DC link voltage is equal to 24 kV and the instantaneous AC max phase voltage is equal to 11.27kV for a line-to-line (L-L) AC root mean square (RMS) voltage of 13.8 kV.

For applications requiring that the DC link voltage is variable and lower than the instantaneous AC max phase voltage, for example when the instantaneous AC max phase voltage is equal to 11.27kV for a L-L AC RMS voltage of 13.8 kV and the DC link voltage is equal to 6kV DC, the referenced prior-art power converter does not work.

It is therefore proposed to remedy to all or some of the disadvantages related to power converters known from the prior art.

### SUMMARY OF THE EMBODIMENTS

In accordance with aspects of the present disclosure, a power converter is presented.

The power converter comprises at least one leg including a first string including a plurality of switching units, a plurality of unidirectional current switches, a first connecting node, and a second connecting node, wherein the first string is operatively coupled across a first and a second bus, and a second string operatively coupled to the first string via the first connecting node and the second connecting node, wherein the second string comprises a plurality of unidirectional current switches and a third connecting node operatively coupled to a third bus. The power converter further comprises a controller configured to control switching of the plurality of switching units.

In accordance with yet another aspect of the present disclosure, a system for power conversion is presented. The system comprises a power source, a load, and a power converter. The power converter comprises one or more legs. Each of the one or more legs comprises a first string including a plurality of switching units, a plurality of unidirectional current switches, a first connecting node, and a second connecting node, wherein the first string is operatively coupled across a first and a second bus, and a second string operatively coupled to the first string via the first connecting node and the second connecting node, wherein the second string comprises a plurality of unidirectional current switches and a fourth connecting node operatively coupled to a fourth bus. The power converter further comprises a controller configured to control switching of the plurality of switching units.

In accordance with yet another aspect of the present disclosure, a system for power conversion is presented. The system includes a power source, a load, and a power converter. The power converter includes one or more legs. Each of the one or more legs comprises a first string including a plurality of switching units, a plurality of unidirectional current switches, a first connecting node, a second connecting node, and a third connecting node, wherein the first string is operatively coupled between a first and a second bus, and the third connecting node of the one or more legs are operatively coupled to each other, and a second string operatively coupled to the first string via the first connecting node and the second connecting node, wherein the second string comprises a plurality of unidirectional current switches and a fourth connecting node operatively coupled to a fourth bus. Furthermore, the system includes a controller configured to control switching of the plurality of switching units.

### BRIEF DESCRIPTION OF THE DRAWINGS

Illustrative embodiments may take form in various components and arrangements of components. Illustrative embodiments are shown in the accompanying drawings, throughout which like reference numerals may indicate corresponding or similar parts in the various drawings. The drawings are only for purposes of illustrating the embodiments and are not to be construed as limiting the disclosure. Given the following enabling description of the drawings, the novel aspects of the present disclosure should become evident to a person of ordinary skill in the relevant art(s).
FIG. 1 is a diagrammatical representation of a system for power conversion.
FIG. 2 is a diagrammatical representation of a first exemplary embodiment of a portion of a power converter for use in the system of FIG. 1, according to aspects of the present disclosure.
FIG. 3A illustrates a second exemplary embodiment of a unidirectional current switch according to aspects of the present disclosure.
FIG. 3B illustrates a third exemplary embodiment of the unidirectional current switch with an antiparallel diode according to aspects of the present disclosure.
FIG. 3C illustrates a fourth exemplary embodiment of the unidirectional current switch with an antiparallel identical unidirectional current switch according to aspects of the present disclosure.
FIG. 4 illustrates a first exemplary embodiment of a switching unit according to aspects of the present disclosure.
FIG. 5 illustrates a second exemplary embodiment of the switching unit according to aspects of the present disclosure.
FIG. 6 illustrates a third exemplary embodiment of the switching unit according to aspects of the present disclosure.
FIG. 7 illustrates a first exemplary embodiment of a controllable switch according to aspects of the present disclosure.
FIG. 8 illustrates a second exemplary embodiment of the controllable switch according to aspects of the present disclosure.
FIGs. 9 and 10 are diagrammatical representations of different operating states of a first exemplary embodiment of a leg of the power converter of FIG. 2, according to aspects of the present disclosure.
FIG. 11 is a diagrammatical representation of a first exemplary embodiment of a three phase power converter for use in the system of FIG. 1, according to aspects of the present disclosure.
FIG. 12 is a diagrammatical representation of voltage waveforms corresponding to different states of three phases in one line cycle, for use in the system of FIG. 11.
FIG. 13 is a diagrammatical representation of a second exemplary embodiment of a portion of a power converter for use in the system of FIG. 1, according to aspects of the present disclosure.
FIGs. 14 and 15 are diagrammatical representations of different operating states of a second exemplary embodiment of a leg of the power converter of FIG. 13, according to aspects of the present disclosure.
FIG. 16 is a diagrammatical representation of a second exemplary embodiment of a three phase power converter for use in the system of FIG. 1, according to aspects of the present disclosure.
FIG. 17 is a diagrammatical representation of voltage waveforms corresponding to different states of three phases in one line cycle, for use in the system of FIG. 16.

### DETAILED DESCRIPTION

Unless defined otherwise, technical and scientific terms used herein have the same meaning as is commonly understood by one of ordinary skill in the art to which this disclosure belongs. The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced items. The term "or" is meant to be inclusive and means one, some, or all of the listed items. The use of "including," "comprising" or "having" and variations thereof herein are meant to encompass the items listed thereafter and equivalents thereof as well as additional items. The terms "connected" and "coupled" are not restricted to physical or mechanical connections or couplings, and can include electrical connections or couplings, whether direct or indirect. Furthermore, the terms "circuit" and "circuitry" and "controller" may include either a single component or a plurality of components, which are either active and/or passive and are connected or otherwise coupled together to provide the described function.

As will be described in detail hereinafter, various embodiments of an exemplary system for power conversion and method for power conversion are presented. By employing the power converter and the method for power conversion described hereinafter, a multilevel converter is provided. In one example, the power converter may include a modular multilevel rectifier.

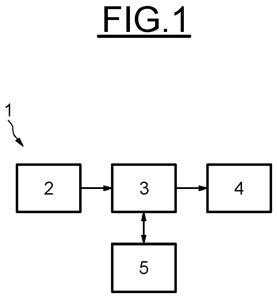

Turning now to the drawings, by way of example in FIG. 1, a system 1 for converting power is depicted. In one embodiment, the system 1 for converting power may include a power source 2, a power converter 3, and a load or source 4. The term source, as used herein, is used to refer to a renewable power source, a non-renewable power source, a generator, a grid, and the like. In one embodiment, the source 2 may be operatively coupled to a first terminal (not shown) of the power converter 3. A second terminal (not shown) of the power converter 3 may be operatively coupled to the load 4 such as an electric motor drive or a subsea load.

Also, the system 1 may include a controller 5. The controller 5 may be configured to control the operation of the power converter 3, in one embodiment. By way of example, the controller 5 may be configured to control the operation of the power converter 3 by controlling switching of a plurality of semiconductor switches of the power converter 3. Furthermore, in one embodiment, the system 1 may also include other circuit components (not shown) such as, but not limited to, a circuit breaker, an inductor, a compensator, a capacitor, a rectifier, a reactor, a filter, and the like.

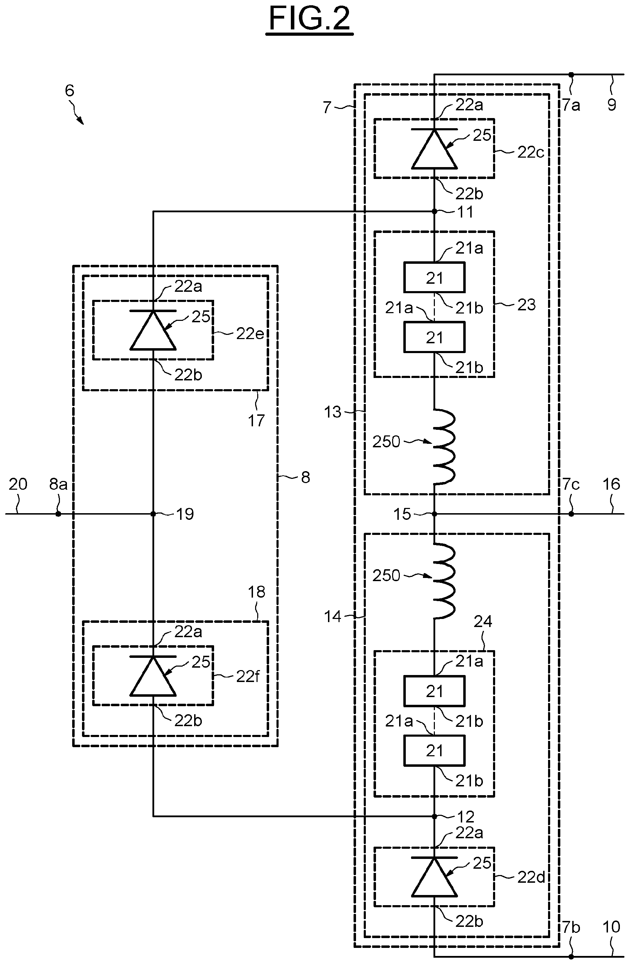

Turning now to FIG. 2, a diagrammatical representation of an exemplary embodiment of a portion of the power converter 3 of FIG. 1, is depicted. In particular, a first embodiment of a leg 6 of the power converter 3 is depicted in the embodiment of FIG. 2.

The leg 6 may be employed in a power rectifier such as a single phase power rectifier, a two phases power rectifier, a three phase power rectifier, and other equivalent multiphase power rectifiers.

The leg 6 of the power converter may include a first string 7 and a second string 8. More particularly, the first string 7 may be operatively coupled to the second string 8 to form the leg 6. Furthermore, the first string 7 comprises a first connection 7a which may be operatively coupled to a first bus 9 and a second connection 7b which may be operatively coupled to a second bus 10. In one embodiment, the first bus 9 may include a positive DC bus and the second bus 10 may include a negative DC bus, the first bus 9 and the second bus 10 forming a DC link. The second string 8 may be operatively coupled to the first string 7 via a first connecting node 11 and a second connecting node 12. Also, the first string 7 may include a first branch 13 operatively coupled to a second branch 14 via a third connecting node 15. The third connecting node 15 may be operatively coupled to a third bus 16 via a third connection 7c of the leg 6.

Similarly, the second string 8 may include a first portion 17 operatively coupled to a second portion 18 via a fourth connecting node 19.

The fourth connecting node 19 may be operatively coupled to a fourth bus 20 via a fourth connection 8a.

The fourth bus 20 comprises an alternating current AC phase.

Moreover, in the present example of FIG. 2, the third bus 16 may be a direct current bus and more particularly, a middle DC bus which may be at a negative potential with respect to the first bus 9 and at a positive potential with respect to the second bus 10. In one embodiment, the middle bus may be floating or grounded or a high impedance grounded bus.

The first string 7 may include a plurality of switching units 21 and at least two unidirectional current switches 22c, 22d, and the second string 8 may include at least two unidirectional current switches 22e, 22f.

The switching units 21 are controlled by the controller 5.

Each switching unit 21 comprises a first end 21a and a second end 21b, and each unidirectional current switch 22c, 22d, 22e, 22f comprises a first connection 22a and a second connection 22b.

The first branch 13 comprises a first set 23 of switching units 21 of the plurality of switching units of the first string 7 and a first unidirectional current switch 22c of the two unidirectional current switches 22c, 22d of the first string 7.

Similarly, the second branch 14 comprises a second set 24 of switching units 21 of the plurality of switching units of the first string 7 and a second unidirectional current switch 22d of the two unidirectional current switches 22c, 22d of the first string 7.

The number of switching units 21 of the first and second sets 23, 24 is equal.

Each of the first branch 13 and the second branch 14 may further comprise an inductor 250.

The switching units 21 of the first set 23 are connected in series so that the first end 21a of a switching unit 21 is connected to the second end 21b of an adjacent switching unit 21.

The first remaining end 21a of the switching unit 21 of the first set 23 is connected to the first connecting node 11 and to the output 22b of the first unidirectional current switch 22c and the second remaining end 21b of the switching unit 21 of the first set 23 is connected to a first end of the inductor 250 of the first branch 13.

The remaining end of a switching unit is the end of the said switching unit which is not connected to an end of another switching unit.

The second end of the inductor 250 of the first branch 13 is connected to the third connecting node 15.

The first connection 22a of the first unidirectional current switches 22c is operatively coupled to the first connection 7a.

The switching units 21 of the second set 24 are connected in series.

The first remaining end 21a of the switching unit 21 of the second set 24 is connected to a first end of the inductor 250 of the second branch 14 and the second remaining end 21b of the switching unit 21 of the second set 24 is connected to the second connecting node 12.

The second end of the inductor 250 of the second branch 14 is connected to the third connecting node 15.

The first connection 22a of the second unidirectional current switch 22d of the two unidirectional current switches 22 is connected to the second connecting node 12 and the second connection 22b of the second unidirectional current switch 22d of the two unidirectional current switches 22 is operatively coupled to the second connection 7b.

The first portion 17 comprises a first unidirectional current switch 22e of the two unidirectional current switches 22e, 22f and the second portion 18 comprises the second unidirectional current switch 22f of the two unidirectional current switches 22e, 22f.

The first connection 22a of the first unidirectional current switch 22e is operatively coupled to the first connection point 11 and the second connection 22b of the first unidirectional current switch 22e is connected to the fourth connecting node 19.

The first connection 22a of the second unidirectional current switch 22f is connected to the fourth connecting node 19 and the second connection 22b of the second unidirectional current switch 22f is operatively coupled to the second connection point 12.

The switching units 21 may be a combination of a plurality of fully controllable semiconductor switches and an energy storage device.

As illustrated, in a first exemplary embodiment of the unidirectional switch 22c, 22d, 22e, 22f, each unidirectional current switch 22c, 22d, 22e, 22f comprises a diode 25, the cathode of the diode 25 being connected to the first connection 22a and the anode of the diode 25 being connected to the second connection 22b.

The diode 25 may be a silicon diode or a silicon-carbide diode.

The use of diodes 25 permits to significantly reduced cost of the leg with higher reliability.

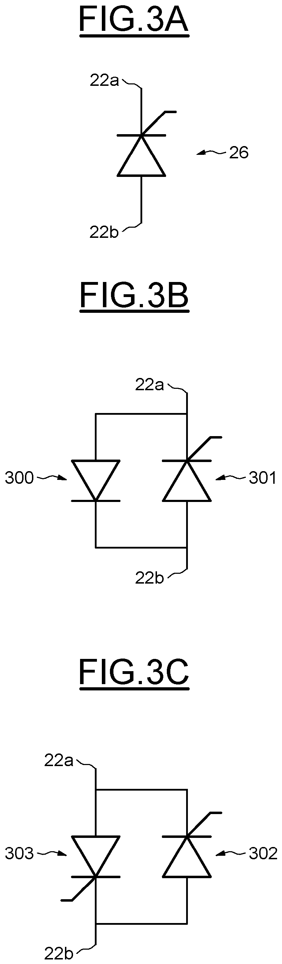

In variant, as illustrated in FIG. 3A, each unidirectional current switch 22c, 22d, 22e, 22f may comprises a silicon controlled rectifier SCR 26, the cathode of the SCR 26 being connected to the first connection 22a, the anode of the SCR 26 being connected to the second connection 22b, an the gate of the SCR 26 being operatively coupled to the controller 5.

The implementation of SCR 26 in the unidirectional current switch 22c, 22d, 22e, 22f permits to control the switching of the SCR 26 compared to the implementation of diodes 25.

FIC. 3B is a block diagram of a second exemplary embodiment of the unidirectional current switch 22c, 22d, 22e, 22f with an antiparallel diode.

Each semiconductor switch 22c, 22d, 22e, 22f comprises an antiparallel diode 300 and a silicon controlled rectifier (SCR) 301.

The anode of the antiparallel diode 300 and the cathode of the SCR 301 are connected to the first connection 22a of the unidirectional current switch 22c, 22d, 22e, 22f.

The cathode of the antiparallel diode 300 and the anode of the SCR 301 are connected to the second connection 22b of the unidirectional current switch 22c, 22d, 22e, 22f.

The gate of the SCR 301 is connected to the controller 5.

FIC. 3C is a block diagram of a third exemplary embodiment of the unidirectional current switch 22c, 22d, 22e, 22f with a silicon controlled rectifier (SCR) and an antiparallel identical SCR.

Each semiconductor switch 22c, 22d, 22e, 22f comprises a silicon controlled rectifier (SCR) 302 and an antiparallel identical SCR 303.

The anode of the antiparallel SCR 303 and the cathode of the SCR 302 are connected to the first connection 22a of the unidirectional current switch 22c, 22d, 22e, 22f.

The cathode of the antiparallel SCR 303 and the anode of the SCR 302 are connected to the second connection 22b of the unidirectional current switch 22c, 22d, 22e, 22f.

The gate of the SCR 302 and the gate of the antiparallel SCR 303 are connected to the controller 5.

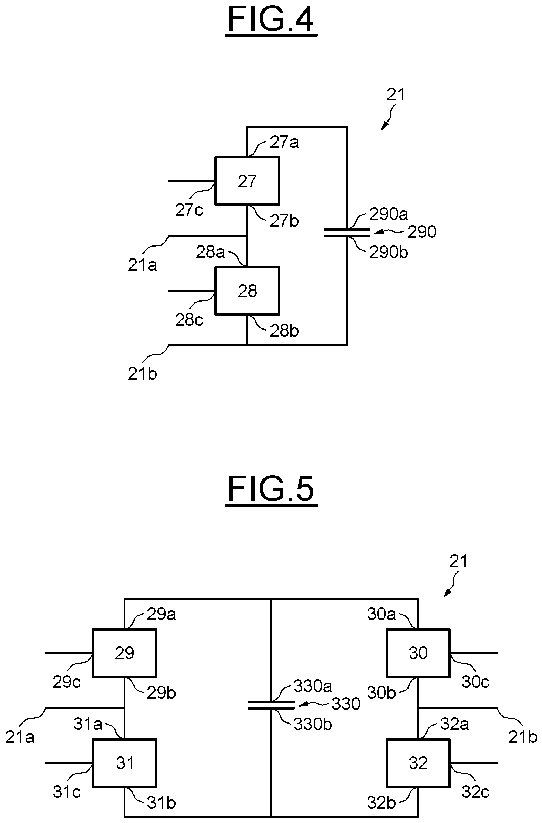

FIG. 4 illustrates schematically a first exemplary embodiment of the switching unit 21.

In the presently contemplated configuration, the switching unit 21 may be referred to as a half bridge converter and includes two identical controllable switches 27, 28 and an energy storage device 290 comprising a first end 290a and a second end 290b.

The energy storage device 290 may include at least one of a plurality of capacitors.

Each controllable switch 27, 28 comprises a first end 27a, 28a, a second end 27b, 28b, and a command input 27c, 28c connected to the controller 5.

The first end 27a of a first controllable switch 27 is connected to the first end 290a of the energy storage device 290.

The second end 27b of the first controllable switch 27 and the first end 28a of the second controllable switch 28 are connected to the first end 21a of the switching unit 21.

The second end 28b of the second controllable switch 28 is connected to the second end 290b of the energy storage device 290 and to the second end 21b of the switching unit 21.

Furthermore, in one non-limiting example, when the first controllable switch 27 is activated and the second controllable switch 28 is deactivated, the energy storage device 290 may appear across the first end 21a and the second end 21b. Consequently, the charge across the energy storage device 290 appears as a voltage across the first end 21a and the second end 21b. Alternatively, when the second controllable switch 28 is activated and the first controllable switch 27 is deactivated, the energy storage device 290 is shunted thereby providing zero voltage across the first end 21a and the second end 21b. Hence, by controlling the switching of the controllable switches 27, 28 in the plurality of switching units 21 on the first string 7, the voltage developed across the first string 7 may be regulated.

FIG. 5 illustrates schematically a second exemplary embodiment of the switching unit 21.

In the presently contemplated configuration, the switching unit 21 may be referred to as a full bridge converter and may include identical controllable switches 29, 30, 31, 32, and an energy storage device 330 comprising a first end 330a and a second end 330b.

The energy storage device 330 may include at least one of a plurality of capacitors.

Each controllable switches 29, 30, 31, 32 comprises a first end 29a, 30a, 31a, 32a, a second end 29b, 30b, 31b, 32b, and a command input 29c, 30c, 31c, 32c connected to the controller 5.

The first end 29a of a first controllable switch 29 and the first end 30a of a second controllable switch 30 are connected to the first end 33a of the energy storage 33.

The second end 31b of a third controllable switch 31 and the second end 32b of the fourth controllable switch 32 are connected to the second end 33b of the energy storage 33.

The second end 29b of the first controllable switch 29 and the first end 31a of the third controllable switch 31 are connected to the first end 21a of the switching unit 21.

The second end 30b of the second controllable switch 30 and the first end 32a of the fourth controllable switch 32 are connected to the second end 21b of the switching unit 21.

As can be seen, compared to the first exemplary embodiment of the switching unit 21 illustrated in FIG. 4, the second exemplary embodiment of the switching unit 21 illustrated in FIG. 5 includes two additional controllable switches.

In one embodiment, controllable switches 29, 30, 31, 32 are controlled to regulate a voltage across the first end 21a and the second end 21b of the switching unit 21.

Contrary to the first exemplary embodiment of switching unit 21, the second exemplary embodiment of switching unit 21 may produce three voltage levels across the first end 21a and the second end 21b of the switching unit 21. The three voltages levels would be a zero voltage level, positive and negative polarity voltage levels, wherein the positive and the negative polarity voltage levels represent a charge across energy storage device 33.

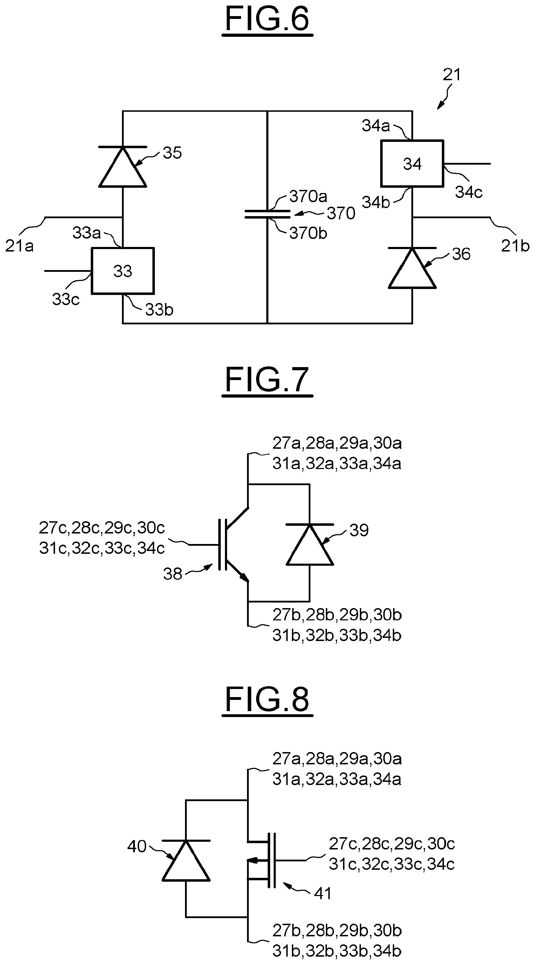

FIG. 6 illustrates schematically a third exemplary embodiment of the switching unit 21.

In the presently contemplated configuration, the switching unit 21 may be referred to as a hybrid full bridge converter and may include identical controllable switches 33, 34, two diodes 35, 36, and an energy storage device 370 comprising a first end 370a and a second end 370b.

The energy storage device 370 may include at least one of a plurality of capacitors.

Each controllable switches 33, 34 comprises a first end 33a, 34a, a second end 33b, 34b, and a command input 33c, 34c connected to the controller 5.

The first end 33a of a first controllable switch 33 and the anode of a first diode 35 are connected to the first end 21a of the switching unit 21.

The second end 34b of the second controllable switch 34 and the cathode of the second diode 36 are connected to the second end 21b of the switching unit 21.

The cathode of the first diode 35 and the first end 34a of the second controllable switch 34 are connected to the first end 370a of the energy storage device 370.

The anode of the second diode 36 and the second end 33b of the first controllable switch 33 are connected to the second end 370b of the energy storage device 370.

Each controllable switch 27, 28, 29, 30, 31, 32, 33, 34 may include a fully controllable semiconductor switch comprising an insulated gate bipolar transistor (IGBT), a metal oxide semiconductor field effect transistor (MOSFET), a field effect transistor (FET), a gate turn-off thyristor, an insulated gate commutated thyristor (IGCT), an injection enhanced gate transistor (IEGT), a silicon carbide based switch, a gallium nitride based switch, a gallium arsenide based switch, or equivalents thereof.

Each controllable switch 27, 28, 29, 30, 31, 32, 33, 34 may further include a power diode that may be inbuilt and antiparallel to the fully controllable semiconductor switch. The inbuilt power diode may provide a freewheeling path. The power diode may also be referred to as freewheeling diode.

FIG. 7 illustrates schematically a first exemplary embodiment of the controllable switch 27, 28, 29, 30, 31, 32, 33, 34.

The controllable switch 27, 28, 29, 30, 31, 32, 33, 34 comprises a power diode 39 and an insulated gate bipolar transistor IGBT 38.

The drain of the transistor 38 and the cathode of the power diode 39 are connected to the first end 27a, 28a, 29a, 30a, 31a, 32a, 33a, 34a of the controllable switch 27, 28, 29, 30, 31, 32, 33, 34.

The source of the transistor 38 and the anode of the power diode 39 are connected to the second end 27b, 28b, 29b, 30b, 31b, 32b, 33b, 34b of the controllable switch 27, 28, 29, 30, 31, 32, 33, 34.

The gate of the transistor 38 is connected to the command input 27c, 28c, 29c, 30c, 31c, 32c, 33c, 34c of the controllable switch 27, 28, 29, 30, 31, 32, 33, 34.

FIG. 8 illustrates schematically a second exemplary embodiment of the controllable switch 27, 28, 29, 30, 31, 32, 33, 34.

The controllable switch 27, 28, 29, 30, 31, 32, 33, 34 comprises a power diode 40 and a wide bandgap semiconductor, including silicon carbide (SiC) and Gallium Nitride (GaN) transistor, 41.

The drain of the transistor 41 and the cathode of the power diode 40 are connected to the first end 27a, 28a, 29a, 30a, 31a, 32a, 33a, 34a of the controllable switch 27, 28, 29, 30, 31, 32, 33, 34.

The source of the transistor 41 and the anode of the power diode 40 are connected to the second end 27b, 28b, 29b, 30b, 31b, 32b, 33b, 34b of the controllable switch 27, 28, 29, 30, 31, 32, 33, 34.

The gate of the transistor 41 is connected to the command input 27c, 28c, 29c, 30c, 31c, 32c, 33c, 34c of the controllable switch 27, 28, 29, 30, 31, 32, 33, 34.

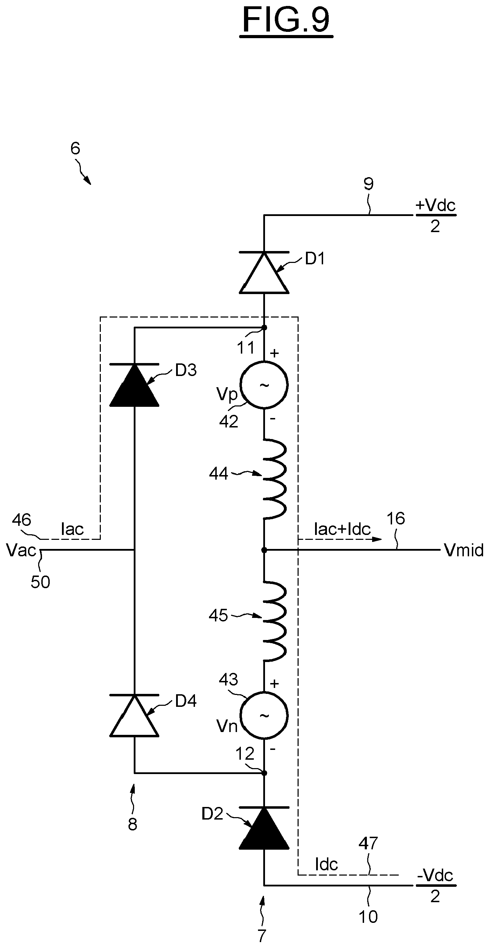

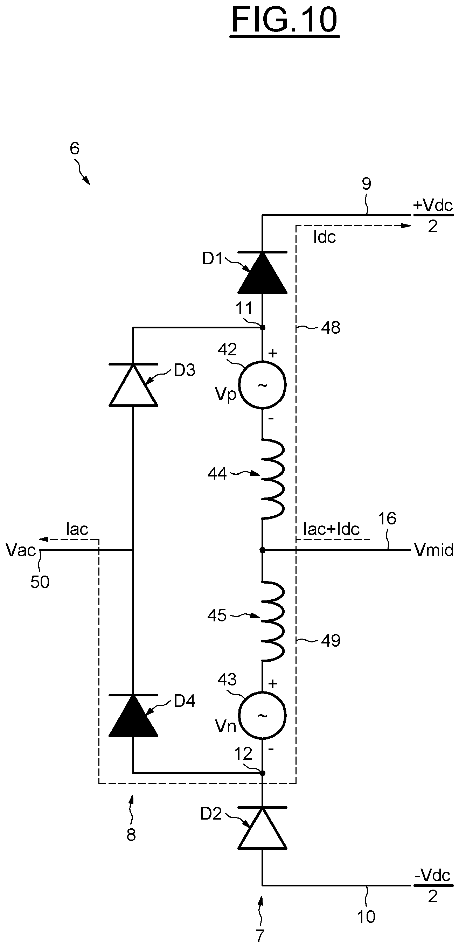

FIGs 9 and 10 illustrates schematically different operating states of a leg of a power rectifier, such as the leg 6 of FIG. 2, according to the aspects of the present disclosure.

FIG. 9 illustrates schematically the leg 6 of FIG. 2, in a first operating state.

The first branch 13 of the first string 7 of FIG. 2 and the second branch 14 of the first string 7 of FIG. 2 may be represented by voltage sources Vp 42 and Vn 43, inductors 44 and 45 respectively, and diodes D1, D2, D3, D4.

The voltage sources Vp 42 and Vn 43 represent the first set and the second set of switching units of the first string 7 respectively.

The diodes D1, D2, D3, D4 represent the unidirectional current switches 22c, 22d, 22e, 22f respectively.

Additionally, the voltage at the first bus 9 may be represented as +Vdc/2 and the voltage at the second bus 10 may be represented as -Vdc/2. By way of example, the voltage of +Vdc/2 at the first bus 9 and the voltage of -Vdc/2 at the second bus 10 may be with respect to a virtual ground. Also, the voltage at the third bus 16 may be represented as Vmid, and the voltage at the alternating current AC phase on the fourth bus 20 may be represented as Vac. In one embodiment, the third bus 16 may be a ground bus, thus, making voltage Vmid as zero.

The alternating current AC phase is referenced 50.

The voltage Vdc of the DC link between the first bus 9 and the second bus 10 is greater than the instantaneous max AC phase voltage between the alternating current phase voltage Vac.

As depicted in FIG. 9, during the first operating state, the diodes D2 and D3 are forward biased and conducting, while diodes D1 and D4 are reverse biased and not conducting.

The conduction of diode D3 provides a first current flow path 46 between alternating current phase 50 and the third bus 16 via voltage source Vp. Similarly, the conduction of diode D2 provides a second current flow path 47 between the second bus 10 and the third bus 16 via voltage source Vn.

Consequently, the first string 7 may be operatively coupled between the second bus 10 and the third bus 16 in a negative state. Furthermore, while the first and second current flow path 46, 47 are established, the voltage across the second bus 10 and the third bus 16 may depend on the switching of the fully controllable semiconductor switches corresponding to the plurality of switching units in the first string 7, such as the switching units 21 of FIG. 2.

A direct current Idc flows through the second bus 10 whereas an AC phase current Iac flows through the alternating current phase 50. Similarly, a DC current Iac+Idc flow via diode D2 in the third bus 16.

In a similar fashion, FIG. 10 is a diagrammatical representation of the leg 6 in a second operating state. In the second state, diodes D1 and D4 are forward biased and are conducting, while diodes D2 and D3 are reverse biased and are not conducting. The conduction of diode D1 may result in providing a third current flow path 48 between the third bus 16 and the first bus 9. Similarly, the conduction of diode D4 may result in providing a fourth current flow path 49 between the third bus 16 and the alternating current phase 50. Accordingly, the first string 7 may be operatively coupled between the first bus 9 and the third bus 16 in a positive state. As in the first state, AC phase current Iac flowing through AC phase 50 is supported by two DC currents Idc and Iac+Idc flowing through the first bus 9 and third bus 16 respectively.

For applications requiring that the DC link voltage is greater than the instantaneous AC max phase voltage, the leg 6 requires fewer number of components as a leg known from the prior art so that the leg 6 is simpler, more reliable, more efficient, and more power dense than the leg known from the prior art.

Further, the control and the hardware to control the switching units 21 of the leg 6 are easier than the control and the hardware to control the switching units of the leg known from the prior art.

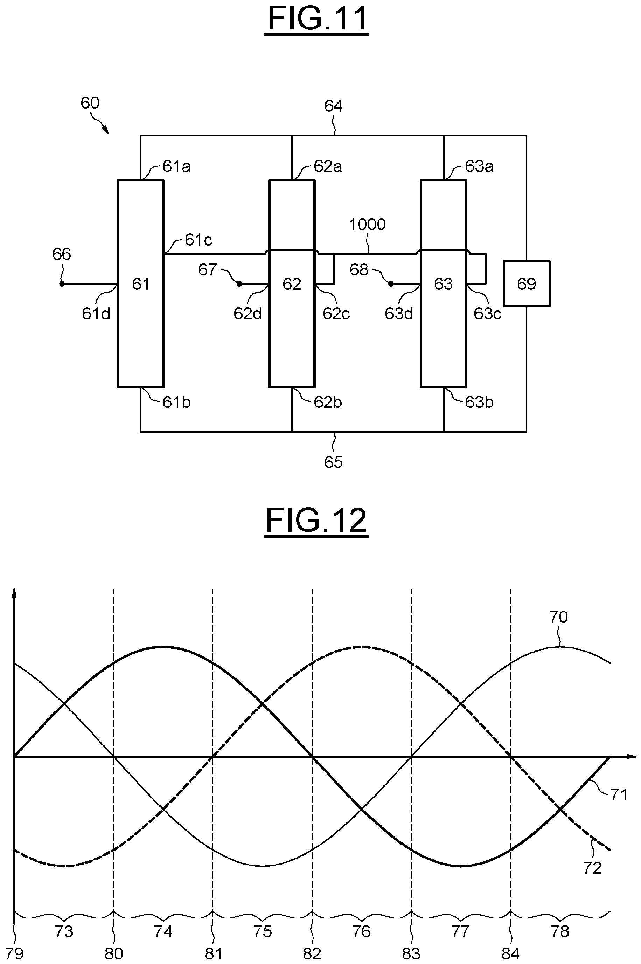

FIG. 11 illustrates schematically a first embodiment of a three phase power converter 60 including three legs 61, 62, 63 identical to the leg 6 illustrated in FIG. 2.

The three phase power converter 60 may be a power rectifier.

Each leg 61, 62, 63 comprises the first connection 61a, 62a, 63a operatively coupled to a first bus 64, the second connection 61b, 62b, 63b operatively coupled to a second bus 65, the third connection 61c, 62c, 63c which may be operatively coupled to a third bus 1000.

The third bus 1000 may form a floating point or grounded or a high impedance grounded bus.

The first bus 64 and the second bus 65 may form a DC terminal.

The first bus 64 is a positive DC bus whereas the second bus 65 is a negative DC bus.

Each leg 61, 62, 63 further comprises the fourth connection 61d, 62d, 63d connected to a fourth bus 66, 67, 68.

Each of the fourth buses 66, 67, 68 may be a different alternating current (AC) phase of a three phase AC system.

The three phase AC system may be a grid supplying the power converter 60.

A load or source 69 may be operatively coupled across the DC terminals or between the first bus 64 and the second bus 65.

The load or source 69 may comprise an electric motor drive, a power converter, an energy storage, or an electric load.

Furthermore, the power rectifier may be operatively coupled to a controller such as the controller 5 of FIG. 5.

The controller 5 may control the switching of the plurality of switching units in the first strings. In one example, the switching of the switching units in the first strings of the legs 61, 62, 63 may be based on a modulation technique. The modulation technique may include pulse width modulation technique, space vector modulation, and the like. Moreover, the controller may be configured to aid in the generation of a direct voltage across first bus 64 with respect to the second bus 65. Also, the controller may be configured to balance and regulate energy stored in the first string of the legs 61, 62, 63 during a line cycle.

The term line cycle, as used herein, may be an AC voltage cycle. In one embodiment, the controller may be disposed at a remote location.

FIG. 12 illustrates a representation of voltage waveforms corresponding to the different operating states of the three AC phases 66, 67, 68 in one line cycle.

The voltage waveforms corresponding to the three phases 66, 67, 68 may include a first voltage waveform 70 corresponding to AC phase 66, a second voltage waveform 71 corresponding to AC phase 67, and a third voltage waveform 72 corresponding to AC phase 68.

In a presently contemplated configuration, the line cycle may be partitioned into six sections 73, 74, 75, 76, 77, 78.

Also, the six sections 73, 74, 75, 76, 77, 78 may have corresponding switching patterns to generate desired outputs. During a portion of the line cycle corresponding to each section, that section may have one or two legs in a positive state and other legs in a negative state.

Furthermore, the line cycle of the three AC phases 66, 67, 68 may include six transient zones 79, 80, 81, 82, 83, 84. The term transient zone, as used herein, is used to refer to a zone during which at least one of the legs 61, 62, 63 transitions from one state to another. In one non-limiting example, at the transient zone 80, the state of the leg 61 associated with AC phase 66 changes from a positive state to a negative state (first voltage waveform 70).

In the section 73, the leg 61 associated with AC phase 66 (first voltage waveform 70) and the leg 62 associated with AC phase 67 (second voltage waveform 71) may be in the positive state while the leg 63 associated with AC phase 68 (third voltage waveform 72) may be in the negative state.

Also, the leg 61 associated with AC phase 66 and the leg 62 associated with AC phase 67 may be operatively coupled in parallel to each other between the second bus 65 and the third bus 1000. Particularly, the second branch associated with the AC phase 66 and the second branch associated with the AC phase 67 may be operatively coupled in parallel to each other between the second bus 65 and the third bus 1000 through diodes D2 and D3 of the corresponding first and second strings.

Moreover, the leg 63 associated with AC phase 68 may be operatively coupled between the third bus 1000 and the first bus 64. In particular, the diodes D1 and D4 corresponding to the first string and second string associated with AC phase 68 may be forward biased and start conducting.

With continuing reference to FIG. 12, the section 73 is followed by the transient zone 80. At the transient zone 80, the leg 62 associated with AC phase 67 continues to be in the positive state and the leg 63 associated with AC phase 68 continues to be in negative state. However, the leg 61 associated with AC phase 66 transitions from the positive state to the negative state. The diodes D1 and D4 of the first string and the second string associated with AC phase 66 may be forward biased and start conducting and the diodes D2 and D3 of the first string and the second string associated with AC phase 66 may be reverse biased and stop conducting.

Similarly, in the section 74, the leg 62 is in the positive state and the legs 61, 63 are in the negative state.

In the section 75, the leg 61 is in the negative state and the legs 62, 63 are in the positive state.

In the section 76, the leg 63 is in the positive state and the legs 61, 62 are in the negative state.

In the section 77, the leg 62 is in the negative state and the legs 61, 63 are in the positive state.

In the section 78, the legs 62, 63 are in the negative state and the leg 61 is in the positive state.

The controller 5 regulates energy stored in the first string 7 during a line cycle.

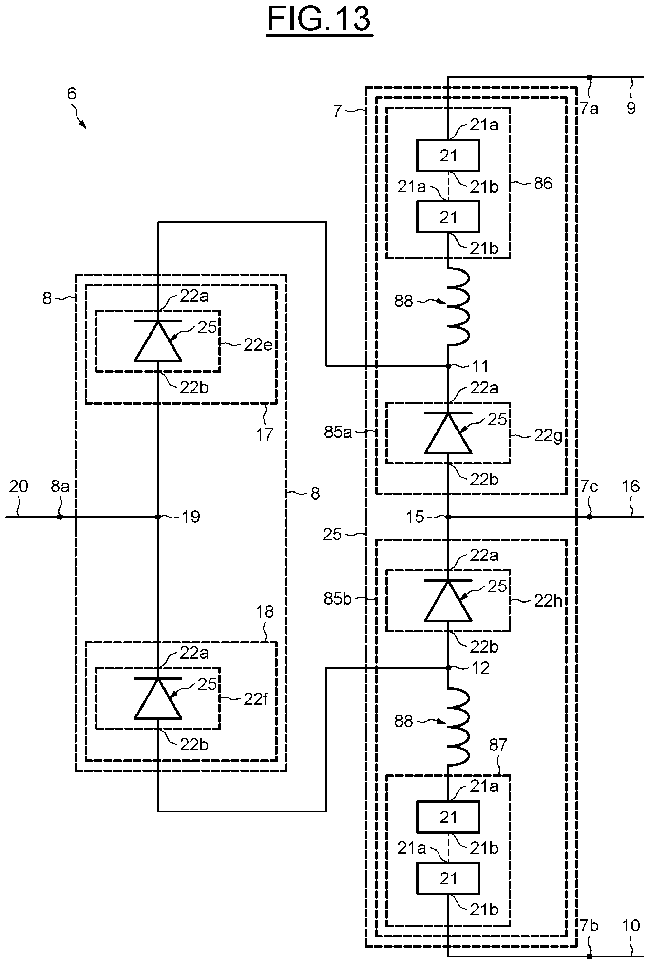

FIG. 13 is a diagrammatical representation of a second exemplary embodiment of a portion of the power converter 3 of FIG. 1, is depicted. In particular, a second embodiment of a leg 6 of the power converter 3 is depicted in the embodiment of FIG. 13.

The leg 6 of the power converter may include a second embodiment of the first string 7 and the second string 8.

The second embodiment of the first string 7 includes the first connection 7a which may be operatively coupled to the first bus 9, the second connection 7b which may be operatively coupled to the second bus 10, and the third connection 7c which may be operatively coupled to the third bus 16.

The second embodiment of the first string 7 may further include the first connecting node 11, the second connecting node 12, and the third connecting node 15 operatively coupled to the third connection 7c.

The second embodiment of the first string 7 may include a third branch 85a operatively coupled to a fourth branch 85b via the third connecting node 15.

The second string 8 may be operatively coupled to the second embodiment of the first string 7 via the first connecting node 11 and the second connecting node 12.

The second embodiment of the first string 7 may include a plurality of switching units 21 and at least two unidirectional current switches 22g, 22h as defined above.

The third branch 85a comprises a first set 86 of switching units 21 of the plurality of switching units of the second embodiment of the first string 7 and a first unidirectional current switch 22g of the two unidirectional current switches 22g, 22h of the second embodiment of the first string 7.

Similarly, the fourth branch 85b comprises a second set 87 of switching units 21 of the plurality of switching units of the second embodiment of the first string 7 and a second unidirectional current switch 22h of the two unidirectional current switches 22g, 22h of the second embodiment of the first string 7.

The number of switching units 21 of the first and second sets 86, 87 is equal.

Each of the third branch 85a and the fourth branch 85b may further comprise an inductor 88.

The switching units 21 of the first set 86 are connected in series so that the first end 21a of a switching unit 21 is connected to the second end 21b of an adjacent switching unit 21.

The first remaining end 21a of the switching unit 21 of the first set 86 is connected to the first connection 7a and the second remaining end 21b of the switching unit 21 of the first set 86 is connected to a first end of the inductor 88 of the third branch 85a.

The second end of the inductor 88 of the third branch 85a is connected to the first connection 22a of the first unidirectional current switch 22g and to the first connecting node 11.

The second connection 22b of the first unidirectional current switch 22g is operatively coupled to the third connecting node 15.

The switching units 21 of the second set 87 are connected in series.

The first remaining end 21a of the switching unit 21 of the second set 87 is connected to a first end of the inductor 88 of the fourth branch 85b and the second remaining end 21b of the switching unit 21 of the second set 87 is connected to the second connection 7b.

The second end of the inductor 88 of the fourth branch 85b is connected to the second connection 22b of the second unidirectional current switches 22h and to the second connecting node 12.

The first connection 22a of the second unidirectional current switch 22g is operatively coupled to the third connecting node 15.

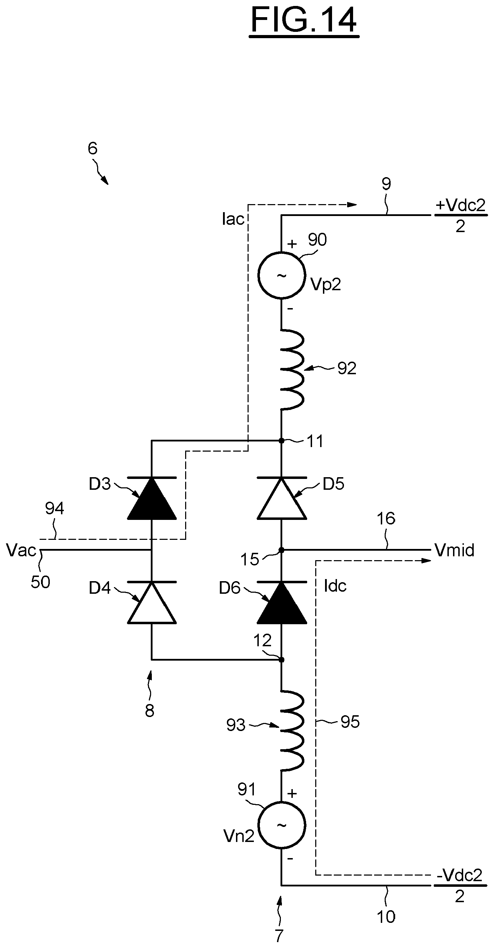

FIG. 14 illustrates schematically the second embodiment of the leg 6 of FIG. 13, in a first operating state.

The third branch 85a of the first string 7 of FIG. 13 and the fourth branch 85b of FIG. 13 of the first string 7 may be represented by voltage sources Vp2 90 and Vn2 91, inductors 92 and 93 respectively, and diodes D3, D4, D5, D6.

The voltage sources Vp2 and Vn2 represent the first set and the second set of switching units of the first string 7 respectively.

The diodes D3, D4, D5, D6 represent the unidirectional current switches 22e, 22f, 22g, 22h respectively.

Additionally, the voltage at the first bus 9 may be represented as +Vdc2/2 and the voltage at the second bus 10 may be represented as -Vdc2/2. By way of example, the voltage of +Vdc2/2 at the first bus 9 and the voltage of -Vdc2/2 at the second bus 10 may be with respect to a virtual ground. Also, the voltage at the third bus 16 may be represented as Vmid, and the voltage at the alternating current AC phase on the fourth bus 20 may be represented as Vac. In one embodiment, the third bus 16 may be a ground bus, thus, making voltage Vmid as zero.

The alternating current AC phase is referenced 50.

The voltage Vdc2 of the DC link between the first bus 9 and the second bus 10 is less than the instantaneous max AC phase voltage between the alternating current phase voltage Vac.

As depicted in FIG. 14, during the first operating state, the diodes D3 and D6 are forward biased and conducting, while diodes D4 and D5 are reverse biased and not conducting.

The conduction of diode D3 provides a first current flow path 94 between alternating current phase 50 and the first bus 9 via voltage source Vp2. Similarly, the conduction of diode D6 provides a second current flow path 95 between the second bus 10 and the third bus 16 via voltage source Vn2.

Consequently, the first string 7 may be operatively coupled between the first bus 9 and the third bus 16 in a positive state. Furthermore, while the first and second current flow path 94, 95 are established, the voltage across the first bus 9 and the third bus 16 may depend on the switching of the fully controllable semiconductor switches corresponding to the plurality of switching units in the first string 7, such as the switching units 21 of FIG. 13.

A direct current Idc flows through the second bus 10 whereas an AC phase current Iac flows through the alternating current phase 50.

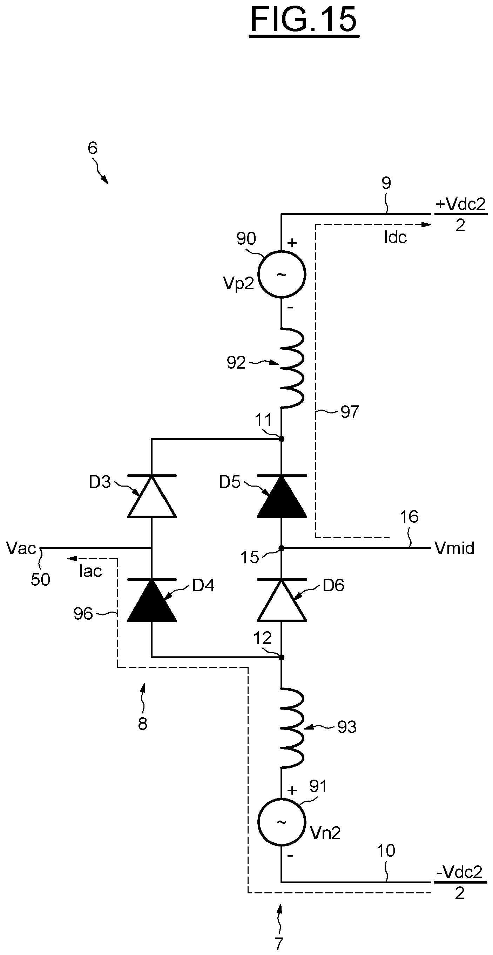

In a similar fashion, FIG. 15 is a diagrammatical representation of the second embodiment of the leg 6 in a second operating state. In the second state, diodes D4 and D5 are forward biased and are conducting, while diodes D3 and D6 are reverse biased and are not conducting. The conduction of diode D4 may result in providing a third current flow path 96 between the second bus 10 and the alternating current phase 50. Similarly, the conduction of diode D5 may result in providing a fourth current flow path 97 between the third bus 16 and the first bus 9. Accordingly, the first string 7 may be operatively coupled between the second bus 10 and the third bus 16 in a negative state.

A direct current Idc flows through the first bus 9 whereas an AC phase current Iac flows through the second bus 10.

The second embodiment of the leg 6 is appropriate for AC to DC conversion/rectification applications where DC link voltage is less than the instantaneous max AC phase voltage and applies to power factor 0.87 to 1 for rectifier applications which represents the large majority of rectifier applications.

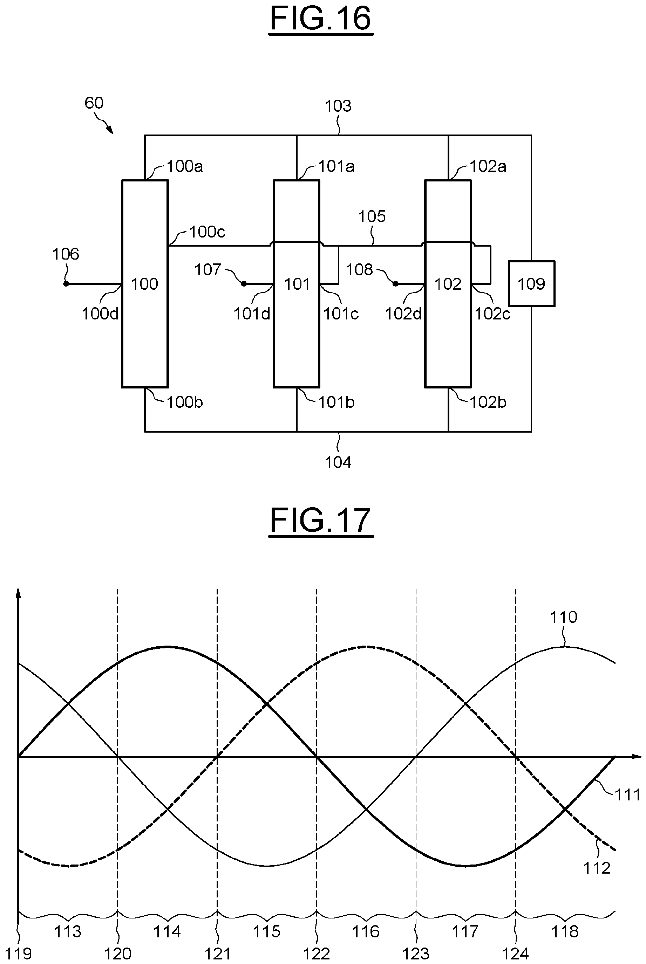

FIG. 16 illustrates schematically a second embodiment of a three phase power converter 60 including three legs 100, 101, 102 identical to the second embodiment of the leg 6 illustrated in FIG. 13.

Each leg 100, 101, 102 comprises the first connection 100a, 101a, 102a operatively coupled to a first bus 103, the second connection 100b, 101b, 102b operatively coupled to a second bus 104, and the third connection 100c, 101c, 103c which may be operatively coupled to a third bus 105.

The third bus 105 may form a floating point or grounded or a high impedance grounded bus.

The first bus 103 and the second bus 104 may form a DC terminal.

The first bus 103 is a positive DC bus whereas the second bus 104 is a negative DC bus.

Each leg 100, 101, 102 further comprises the fourth connection 100d, 101d, 102d connected to a fourth bus 106, 107, 108.

Each of the fourth buses 106, 107, 108 may be a different alternating current (AC) phase of a three phase AC system.

The three phase AC system may be a grid supplying the power converter 60.

A load or source 109 may be operatively coupled across the DC terminals or between the first bus 103 and the second bus 104.

The load or source 109 may comprise an electric motor drive, a power converter, an energy storage, or an electric load.

Furthermore, the power rectifier may be operatively coupled to a controller such as the controller 5 of FIG. 5.

The controller may control the switching of the plurality of switching units in the first strings. In one example, the switching of the switching units in the first strings of the legs 100, 101, 102 may be based on a modulation technique. The modulation technique may include pulse width modulation technique, space vector modulation, and the like. Moreover, the controller may be configured to aid in the generation of a direct voltage across first bus 103 with respect to the second bus 104. Also, the controller may be configured to balance and regulate energy stored in the first string of the legs 100, 101, 102 during a line cycle.

The term line cycle, as used herein, may be an AC voltage cycle. In one embodiment, the controller may be disposed at a remote location.

FIG. 17 illustrates a representation of voltage waveforms corresponding to the different operating states of the three AC phases 100, 101, 102 in one line cycle.

The voltage waveforms corresponding to the three phases 106, 107, 108 may include a first voltage waveform 110 corresponding to AC phase 106, a second voltage waveform 111 corresponding to AC phase 107, and a third voltage waveform 112 corresponding to AC phase 108.

In a presently contemplated configuration, the line cycle may be partitioned into six sections 113, 114, 115, 116, 117, 118.

Also, the six sections 113, 114, 115, 116, 117, 118 may have corresponding switching patterns to generate desired outputs. During a portion of the line cycle corresponding to each section, that section may have one or two legs in a positive state and other legs in a negative state.

Furthermore, the line cycle of the three AC phases 106, 107, 108 may include six transient zones 119, 120, 121, 122, 123, 124. The term transient zone, as used herein, is used to refer to a zone during which at least one of the legs 100, 101, 102 transitions from one state to another.

In one non-limiting example, at the transient zone 120, the state of the leg 100 associated with AC phase 106 changes from a positive state to a negative state (first voltage waveform 110).

In the section 113, the leg 100 associated with AC phase 106 (first voltage waveform 110) and the leg 101 associated with AC phase 107 (second voltage waveform 111) may be in the positive state while the leg 102 associated with AC phase 108 (third voltage waveform 112) may be in the negative state.

Also, the leg 100 associated with AC phase 106 and the leg 101 associated with AC phase 107 may be operatively coupled in parallel to each other between the second bus 104 and the third bus 105, and the AC phase 106 and the AC phase 107 may be operatively coupled to the first bus 103.

Particularly, the fourth branch associated with the AC phase 106 and the fourth branch associated with the AC phase 107 may be operatively coupled in parallel to each other between the second bus 104 and the third bus 105 through the diode D6 forward biased and start conducting, and the AC phase 106 and the AC phase 107 may be operatively coupled to the first bus 103 through the diode D3 forward biased and start conducting of the legs 100, 101.

Moreover, the leg 102 associated with AC phase 108 may be operatively coupled between the third bus 105 and the first bus 103.

Particularly, the third branch associated with the AC phase 108 may be operatively coupled between the first bus 103 and the third bus 105 through the diode D5 forward biased and start conducting, and the AC phase 108 may be operatively coupled to the second bus 104 through the diode D4 forward biased and start conducting of the leg 102.

With continuing reference to FIG. 17, the section 113 is followed by the transient zone 120. At the transient zone 120, the leg 101 associated with AC phase 107 continues to be in the positive state and the leg 102 associated with AC phase 108 continues to be in the negative state.

However, the leg 100 associated with AC phase 106 transitions from the positive state to the negative state.

The diodes D5 and D4 of the first string and the second string associated with AC phase 106 may be forward biased and start conducting and the diodes D3 and D6 of the first string and the second string associated with AC phase 106 may be reverse biased and stop conducting.

Similarly, in the section 114, the leg 101 is in the positive state and the legs 100, 102 are in the negative state.

In the section 115, the legs 101 and 102 are in the positive state and the leg 100 is in the negative state.

In the section 116, the leg 102 is in the positive state and the legs 100, 101 are in the negative state.

In the section 117, the legs 100, 102 are in the positive state and the leg 101 is in the negative state.

In the section 118, the leg 100 is in the positive state and the legs 101, 102 are in the negative state.

The controller 5 regulates energy stored in the first string 7 during a line cycle.

The first embodiment of the leg 6 illustrated in FIG. 2 and the second embodiment of the leg 6 illustrated in FIG. 13 offer a set of modular multi-level power converter solutions for large ranges of AC voltage delivered on the alternating current AC phase, for non-limiting example between 0 and 13.8 kV, and for larges range of DC voltage on the DC link, for non-limiting example between 0 and 24 kV, and when alternating current AC phase voltage is greater or less than the DC voltage of the DC link.

While the illustrative embodiments are described herein for particular applications, it should be understood that the present disclosure is not limited thereto. Those skilled in the art and with access to the teachings provided herein will recognize additional applications, modifications, and embodiments within the scope thereof and additional fields in which the present disclosure would be of significant utility.

The description herein is provided to enable a person skilled in the art to make or use the disclosure. Various modifications to the disclosure will be apparent to those skilled in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.

## Claims

1. Power converter comprising:
- at least one leg (6) including:
o a first string (7) including a plurality of switching units (21), a plurality of unidirectional current switches (22c, 22d, 22g, 22h), a first connecting node (11), and a second connecting node (12), wherein the first string is operatively coupled across a first and a second bus (9, 10), and
o a second string (8) operatively coupled to the first string (7) via the first connecting node (11) and the second connecting node (12), wherein the second string comprise a plurality of unidirectional current switches (22e, 22f) and a fourth connecting node (19) operatively coupled to a fourth bus (20),
- a controller (5) configured to control switching of the plurality of switching units.

2. Power converter according to claim 1, wherein each unidirectional current switch (22c, 22d, 22e, 22f, 22g, 22h) comprises a silicon controlled rectifier (26), a silicon controlled rectifier (301) with an antiparallel diode (300), a silicon controlled rectifier (302) with an antiparallel identical silicon controlled rectifier (303) or a diode (25).

3. Power converter according to claim 1 or 2, wherein the plurality of switching units (21) comprises a half bridge converter, a full bridge converter or a hybrid full bridge converter.

4. Power converter according to any one of claims 1 to 3, wherein the first string (7) comprises a first branch (13, 85a) and a second branch (14, 85b), the first branch being operatively coupled to the second branch via a third connecting node (15).

5. Power converter according to claim 4, wherein the first branch (13) comprises a first set of switching units (23) of the plurality of switching units (21) of the first string and a first unidirectional current switch (22c) of the plurality of unidirectional current switches (22c, 22d) of the first string, and the second branch (14) comprises a second set of switching units (24) of the plurality of switching units of the first string and a second unidirectional current switch (22d) of the plurality of unidirectional current switches (22c, 22d) of the first string, wherein
o the first set of switching units (23) is operatively coupled to the first connecting node (11) and to the third connecting node (15), the first connecting node being operatively coupled to the first bus (9) with the first unidirectional current switch (22c), and
o the second set of switching units (24) is operatively coupled to the second connecting node (12) and to the third connecting node (15), the second connecting node being operatively coupled to the second bus (10) with the second unidirectional current switch (22d).

6. Power converter according to claim 4, wherein the first branch (85a) comprises a first set of switching units (86) of the plurality of switching units (21) and a first unidirectional current switch (22g) of the plurality of unidirectional current switches (22g, 22h) of the first string, the second branch (85b) comprises a second set of switching units (87) of the plurality of switching units (21) of the first string and a second unidirectional current switch (22h) of the plurality of unidirectional current switches (22g, 22h) of the first string, wherein:
o the first set of switching units (86) is operatively coupled across the first bus (9) and to the first connecting node (11), the first unidirectional current switch (22g) being operatively coupled to the first connecting node (11) and to the third connecting node (15), and
o the second set of switching units (87) is operatively coupled across the second bus (10) and to the second connecting node (12), the second unidirectional current switch (22h) being operatively coupled to the second connecting node (12) and to the third connecting node (15).

7. Power converter according to claims 5 or 6, wherein the first bus (9) comprises a positive direct current bus and the second bus (10) comprises a negative direct current bus.

8. Power converter according to claim 7 dependent on claim 6, wherein the fourth connecting node (19) is operatively coupled to a fourth bus (20) comprises an alternating current phase, the voltage between the first bus and the second bus is less than the instantaneous maximal alternating current phase voltage.

9. Power converter according to any one of claims 6, 7, 8, wherein the power factor of the power converter is between 0.87 and 1.

10. Power converter according to claim 7 dependent on claim 5, wherein the fourth connecting node (19) is operatively coupled to a fourth bus (20) comprising an alternating current phase, the voltage between the first bus (9) and the second bus (10) is greater than the instantaneous maximal alternating current phase voltage.

11. Power converter according to any one of claims 4 to 10, wherein the third connecting node (15) is operatively coupled to a third bus (16).

12. Power converter according to any one of claims 1 to 11, wherein the second string (8) comprises a first portion (17) and a second portion (18), the first portion being operatively coupled to the second portion via the fourth connecting node (19), wherein:
- the first portion (17) comprises a first unidirectional current switch (22e) of the plurality of unidirectional current switches (22e, 22f) of the second string, and the second portion (18) comprises a second unidirectional current switch (22f) of the plurality of unidirectional current switches (22e, 22f) of the second string,
wherein:
- the first unidirectional current switch (22e) is operatively coupled to the first connecting node (11) and to the fourth connecting node (19), and
- the second unidirectional current switch (22f) is operatively coupled to the second connecting node (12) and to the fourth connecting node (19).

13. Power converter according to any one of claims 1 to 12, wherein the controller (5) is configured to operate each of the one or more legs (6) in a positive state or a negative state.

14. A system for power conversion, comprising:
- a power source (2),
- a load or source (4, 69, 109),
- a power converter (3) according to any one of claims 1 to 13.

15. The system according to claim 14, wherein the controller (5) is further configured to regulate energy stored in the first string during a line cycle.
